# EUROPÄISCHE PATENTANMELDUNG

(11) **EP 0 530 722 A2**
(43) Veröffentlichungstag der Anmeldung: **10.03.1993**
(21) Anmeldenummer: 92114824.3
(22) Anmeldetag: 29.08.1992
(51) Int. Cl.: H04M 19/02, H04M 1/00, H04N 1/32, H04M 1/66

(54) **Verfahren und Schaltungsanordnung zur Unterdrückung des Erstrufs von mit Zusatzgeräten verbundenen Fernsprechapparaten**

(30) Priorität: 06.09.1991 DE 4129591
(71) Anmelder: EEH ELEKTRONISCHE GERÄTE GmbH, D-42287 Wuppertal (DE)
(72) Erfinder: Hoffmann, Uwe, Dipl.-Ing., W-5352 Zülpich (DE)
(74) Vertreter: Patentanwälte Ostriga & Sonnet

(57) **Zusammenfassung**

Dargestellt und beschrieben sind ein Verfahren und eine Schaltungsanrdnung zur Erstrufunterdrükkung bei Fernsprechapparaten, die mit einem Zusatzgerät wie Telefax, Modem, Fernschalteinrichtung od. dgl. verbunden sind, bis zur Rufannahme durch das in Annahmebereitschaft befindliche Zusatzgerät. Dies geschieht durch umschaltbares Abkoppeln des Fernsprechapparats vom Fernmeldenetz, Speisung des Fernsprechapparats mittels Ersatzstromquelle, Überwachung des ankommenden Rufs und bei Ruferkennung durch Anschaltung des Fernsprechapparats in die Fernmeldeleitung erst nach Ablauf einer Verzögerungszeit. Hierdurch können Zusatzgeräte angesprochen werde, ohne daß der Fernsprechapparat störend ertönt.

## Beschreibung

Nimmt ein an eine Fernmeldeleitung angeschlossenes Modern, Telefax od. dgl. einen Anruf entgegen, läutet der angeschlossene Fernsprechapparat zumindest einmal mit. Zusätzlich kann auch ein sogenannter "Vorklingler" auftreten. Besonders bei Privatanschlüssen oder in Wohnräumen betriebenen Geschäftsanlagen ist dies außerordentlich lästig, insbesondere bei Nachtabruf, weil dies dazu führt, daß der Betreiber der Anlage gestört oder aufgeweckt wird, obgleich er nicht am Fernsprechapparat verlangt wird, sondern lediglich auf sein Modem eine Nachricht überspielt werden soll. Das gleiche gilt für Telefax-Geräte oder Fernschalteinrichtungen, die selbst keine eigene akustische Rufeinrichtung besitzen. Wenn also nachts ein Telefax eingeht, läutet in nachteiliger Weise das Telefon.

Die einzige Möglichkeit, das Klingeln zu verhindern, besteht darin, daß der Fernsprechapparat oder seine Klingel außer Betrieb genommen werden. Diese Methode ist für die Praxis natürlich nicht geeignet, da hierdurch ankommende Rufe für die Entgegennahme eines Ferngesprächs nicht mehr gehört werden können.

Aufgabe der Erfindung ist es daher, die Möglichkeit dafür zu schaffen, daß ein Modem, ein Telefax oder ein sonstiges in der Fernmeldeleitung befindliches Gerät einen Anruf entgegennehmen kann, ohne daß der Ruf im Fernsprechapparat erklingt. Dies soll bei ansonsten ülicher Benutzbarkeit des Fernsprechapparats gewährleistet sein.

Zur Lösung dieser Aufgabe schlägt die Erfindung ein Verfahren zur vorübergehenden Unterdrückung des Rufs eines mit einem Zusatzgerät wie Telefax, Modem, Fernschalteinrichtung od. dgl. verbundenen Fernsprechapparats bis zur Rufannahme durch das in Annahmebereitschaft befindliche Zusatzgerät, durch umschaltbares Abkoppeln des Fernsprechapparats vom Fernmeldenetz, Speisung des Fernsprechapparats mittels Ersatzstromquelle, Überwachung des ankommenden Rufs und bei Ruferkennung durch Anschaltung des Fernsprechapparats in die Fernmeldeleitung erst nach Ablauf einer Verzögerungszeit vor. Die vorrichtungsgemäße Lösung der Problemstellung besteht in einer Schaltungsanordnung zur vorübergehenden Unterdrückung des Rufs eines mit einem Zusatzgerät wie Telefax, Modem, Fernschalteinrichtung od. dgl. verbundenen Fernsprechapparats mit einem Umschalter zur alternativen Anschaltung des Fernsprechapparats an das Fernmeldenetz oder an eine Ersatzstromquelle, einer vor dem Umschalter abgezweigten Ruferkennungsschaltung und einer vom Umschalter betätigten Steuerlogik mit einer Schaltung für die Betätigung des Umschalters zum verzögerten Freischalten des Fernsprechapparats bei Rufannahmebereitschaft des Zusatzgeräts.

Weitere verfahrensmäßige und schaltungstechnische Vorteile und Ausgestaltungen sind Gegenstand der übrigen Ansprüche.

Diese sogenannte "Erstrufunterdrückung" kann vollautomatisch arbeiten und braucht vom Benutzer nicht betätigt zu werden, wenngleich dies nicht ausgeschlossen ist. Unterdrückt wird das erste Klingeln und ggf. ein Vorklingler des in der Fernmeldeleitung hinter dem Zusatzgerät angeordneten Fernsprechapparates. Voraussetzung ist lediglich, daß das Zusatzgerät der entsprechend ausgestatteten Einrichtung rufannahmebereit ist. Der Umschalter, über den der Fernsprechapparat mit der Fernmeldeleitung verbunden ist, kann aus einem einfachen Relais bestehen. Ist das Zusatzgerät zur Entgegennahme von Anrufen bereit, z.B. seine automatische Rufannahme aktiviert, wird das Relais angezogen und der Fernsprechapparat an die Ersatzstromquelle angeschaltet. Erreicht nun ein Ruf das Zusatzgerät, kann die Klingel des Fernsprechapparates nicht ansprechen. Wird allerdings während einer bestimmten Zeitspanne, vorzugsweise etwa innerhalb von 1,5 sec bei aktivierter Schaltung der Ruf vom Zusatzgerät nicht entgegengenommen, weil z.B. im Gerät eine Störung wie Papierstau od.dgl. vorliegt, wird die Leitung zum Telefon freigeschaltet, so daß alle folgenden Klingler normal erzeugt werden. Damit ist sichergestellt, daß ein Telefonanruf nach wie vor als solcher erkannt und entgegengenommen werden kann. Nicht ausgeschlossen ist ferner, daß das Zusatzgerät auch nach Ablauf dieser Verzögerungzeit die Leitung noch aufnehmen kann, wenn der Hörer des Fernsprechapparates nicht abgenommen ist.

Über eine geeignete Stromerkennenung, z. B. einen Schleifenstromsensor, kann die Einrichtung feststellen, ob der Hörer des angeschlossenen Fernsprechapparates abgehoben ist oder aufliegt. Wird er abgehoben, wird nach einer vorzugsweise etwa 0,5 sec betragenden Zeitspanne die Leitung zum Fernsprechapparat freigeschaltet, so daß normaler Fernsprechbetrieb möglich ist. Diese Freischaltung bleibt auch nach Auflegen des Hörers noch für eine Zeitspanne von vorzugsweise 8 sec aktiv; erst danach schaltet sich die Erstrufunterdrückung wieder ein. Dies dient dazu, einem Benutzer die nochmalige Telefonwahl zu ermöglichen, falls er sich verwählt hat oder falls er nach einem Besetztzeichen sogleich nochmals wählen möchte.

Das Einhalten der Zeiten und die Steuerung des Umschalters (Relais) kann von einem Mikroprozessor oder einer einfacheren technischen Einrichtung übernommen werden.

Die Schaltungsanordnung kann zwischen Zusatzgerät und Fernsprechapparat geschaltet sein. Auch ist es ohne weiteres möglich, eine solche Einrichtung in das Zusatzgerät selbst zu integrieren.

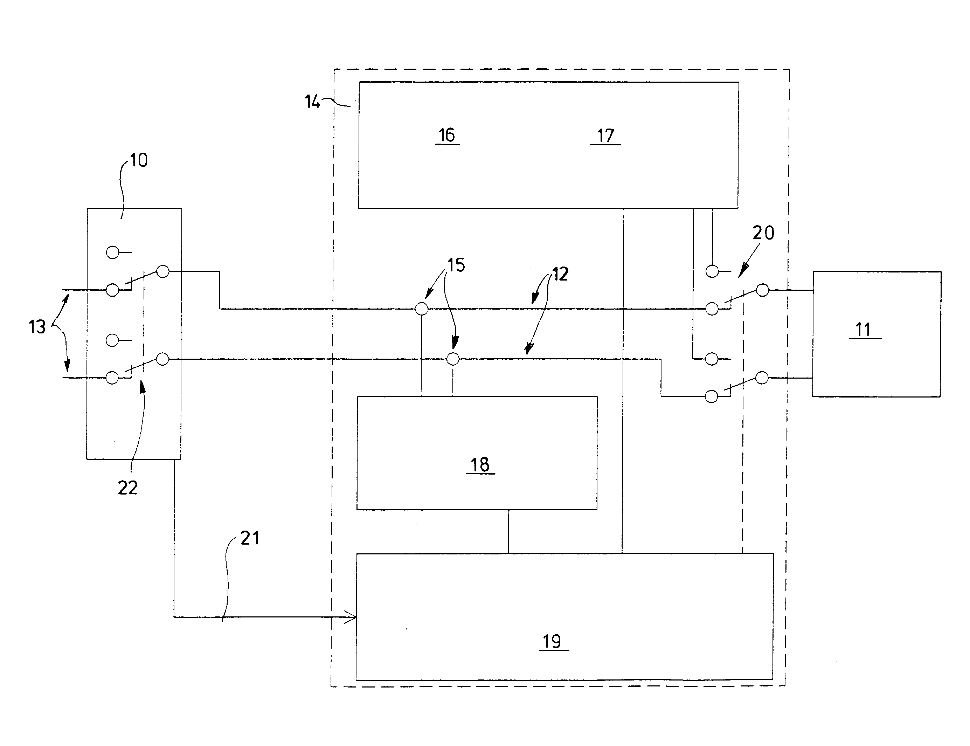

Die Erfindung versteht sich am besten anhand ihrer nachfolgenden Beschreibung unter Bezugnahme auf ein Ausführungsbeispiel. Die Zeichnung stellt den Stromlaufplan vom Eingang einer Fernmeldeleitung in ein Zusatzgerät bis hin zu einem Fernsprechapparat dar.

In der Zeichnung sind mit 10 ein Zusatzgerät wie Telefax, Modem, Fernschalteinrichtung od.dgl. und mit 11 ein Fernsprechapparat bezeichnet, die mittels einer zweiadrigen Leitung 12 miteinander verbunden sind, welche Bestandteil einer Fernmeldeleitung 13 ist. Die mit gestricheltem Umriß versehene, nachfolgend auch mit "Erstrufunterdrückung" bezeichnete Schaltung 14 ist beim dargestellten Ausführungsbeispiel bei 15 von der Leitung 12 zwischen Zusatzgerät und Fernsprechapparat 11 abgezweigt. Die Erstrufunterdrückung 14 umfaßt eine auch "Rückwärtsspeisung" genannte Ersatzstromquelle 16 mit einem Schleifenstromsensor 17, eine Ruferkennung 18 und eine zentrale Steuerlogik 19. Die Ersatzstromquelle 16 kann man sich am einfachsten z.B. als Steckernetzteil vorstellen.

Mit 20 ist ein von der zentralen Steuerlogik 19 betätigbares, Umschaltkontaktsätze aufweisendes Relais 20 beziffert.

Mit 21 ist eine Steuerleitung bezeichnet, über die vom Zusatzgerät 10 der zentralen Steuerlogik 19 signalisiert wird, ob das Zusatzgerät 10bereit oder nicht bereit ist, ankommende Anrufe anzunehmen. Damit wird die Erstrufunterdrückung 14 ein-oder ausgeschaltet, denn sie soll ja nur dann aktiv sein, wenn das Zusatzgerät 10 Aufnahmebereitschaft signalisiert.

Solange das Zusatzgerät 10 nicht sendet, befindet sich ein üblicherweise darin integriertes Relais 22 in abgefallenem Zustand, wie dargestellt. Der in der Fernmeldeleitung 13 ankommende Ruf kann also vom Zusatzgerät 10 erkannt und über die Leitung 12 gleichzeitig vom Fernsprechapparat 11 wahrgenommen werden. Dies entspricht der gezeichneten Schaltstellung des Relais 20.

Bei aktivierter Erstrufunterdrückung 14 zieht das Relais 20 an, trennt die Leitung 12 zum Fernsprechapparat 11 und schließt diesen an die Ersatzstromquelle 16 an. Nun kann ein ankommender Ruf die Klingel des Fernsprechapparates 11 nicht mehr erreichen. Wird also über die Fernmeldeleitung 13 das Zusatzgerät 10angesprochen, kann es den Ruf aufnehmen, ohne daß die Klingel im Fernsprechapparat 11 läutet.

In einem derartigen Betriebsfall stellt die Ruferkennung 18 den ankommenden Ruf jedoch fest und veranlaßt die zentrale Steuerlogik 19, daß das Relais 20 nach Ablauf einer Verzögerungszeit, die idealerweise etwa 1,5 sec beträgt, das Relais 20 wieder abfällt. Diese Zeitspanne reicht aus, um den bislang obligatorischen Erstruf und ggf. noch einen "Vorklingler" der Fernsprechapparateklingel akustisch zu unterdrücken. Nachfolgende Rufe hingegen können wieder vom Fernsprechapparat 11 signalisiert werden. Dies geschieht jedoch nur dann, wenn nicht zwischenzeitlich das Zusatzgerät 10 den ankommenden Ruf aufgenommen hat.

Wenn bei aktivierter Erstrufunterdrückung der Hörer des Fernsprechapparates 11 aufgenommen wird, signalisiert dies die Stromerkennung 17, die man als Schleifenstromsensor realisieren kann. Ist der Hörer abgenommen, schaltet die zentrale Steuerlogik 19 durch Betätigung des Relais 20 nach etwa 0,5 sec die Leitung zum Fernsprechapparat 11 frei, so daß normaler Fernsprechbetrieb möglich ist. (Dies setzt lediglich voraus, daß nicht das Relais 22 im Zusatzgerät 10 die Leitung getrennt hat, was jedoch nur der Fall ist, wenn das Zusatzgerät 10 sendet oder empfängt, also in Betriebsphasen, in denen sinnvollerweise ohnehin nicht telefoniert werden kann und soll.) Die Freischaltung bleibt sodann auch nach Auflegen des Hörers noch für ca. 8 sec aktiv. Nach Ablauf dieser Verzögerungszeit schaltet die zentrale Steuerlogik 20 das Relais wieder um, so daß der Fernsprechapparat 11 bei aktivierter Erstrufunterdrückung erneut von der Ersatzstromquelle 16 gespeist wird.

Nach dem beschriebenen Verfahren und der erläuterten Schaltungsanordnung ist problemloses Telefonieren trotz der Unterdrückung des ersten ankommenden Rufs sowie ggf. eines Vorklinglers möglich. Auch ist ein automatischer Betrieb möglich, da das Zusatzgerät 10 über die Steuerleitung 21 sekbst die Erstrufunterdrückung 14 ein- oder ausschalten kann, ohne daß der Benutzer auf die Betriebsart Einfluß nehmen muß.

Beim dargestellten Ausführungsbeispiel ist die Erstrufunterdrückung 14 als Zusatzschaltung zwischen Zusatzgerät 10 und Fernsprechapparat 11 dargestellt. Man kann sich die Schaltung jedoch auch innerhalb des Zusatzgerätes 10 realisiert vorstellen. Somit besteht die Möglichkeit, Telefaxe, Modems u.dgl. bei der werkseitigen Ausrüstung sogleich mit einer Erstrufunterdrückung auszurüsten.

## Patentansprüche

1. Verfahren zur vorübergehenden Unterdrückung des Rufs eines mit einem Zusatzgerät wie Telefax, Modem, Fernschalteinrichtung od. dgl. verbundenen Fernsprechapparats bis zur Rufannahme durch das in Annahmebereitschaft befindliche Zusatzgerät durch umschaltbares Abkoppeln des Fernsprechapparats vom Fernmeldenetz, Speisung des Fernsprechapparats mittels Ersatzstromquelle, Überwachung des ankommenden Rufs und bei Ruferkennung durch Anschaltung des Fernsprechapparats in die Fernmeldeleitung erst nach Ablauf einer Verzögerungszeit.

2. Verfahren nach Anspruch 1, gekennzeichnet durch Überwachung des Schleifenstroms des Fernsprechapparats zur Erkennung seines Zustandes (Hörer abgehoben oder aufgelegt) sowie durch Freischaltung nach Ablauf einer Verzögerungszeit bei abgenommenem Hörer.

3. Verfahren nach Anspruch 2, dadurch gekennzeichnet, daß der Fernsprechapparat nach Auflegen seines Hörers erst nach Ablauf einer Verzögerungszeit wieder vom Fernmeldenetz getrennt und an die Ersatzstromversorgung angeschlossen wird.

4. Schaltungsanordnung zur vorübergehenden Unterdrückung des Rufs eines mit einem Zusatzgerät (10) wie Telefax, Modem, Fernschalteinrichtung od. dgl. verbundenen Fernsprechapparats (11) mit einem Umschalter (20) zur alternativen Anschaltung des Fernsprechapparats (11) an das Fernmeldenetz (13) oder an eine Ersatzstromquelle (16), einer vor dem Umschalter (20) abgezweigten Ruferkennungsschaltung (18) und einer vom Umschalter (20) betätigten Steuerlogik (19) mit einer Verzögerungsschaltung für die Betätigung des Umschalters (20) zum verzögerten Freischalten des Fernsprechapparats (11) bei Rufannahmebereitschaft des Zusatzgeräts (10).

5. Schaltungsanordnung nach Anspruch 4, dadurch gekennzeichnet, daß die Verzögerungsschaltung auf eine Verzögerungszeit (ti) von etwa 1 bis 2 sec ausgelegt ist.

6. Schaltungsanordnung nach Anspruch 4, dadurch gekennzeichnet, daß sie eine Schleifenstromsensorschaltung (17) und eine Verzögerungsschaltung umfaßt, die mittels des Umschalters (20) den Fernsprechapparat (11) bei abgenommenem Hörer nach Ablauf einer Verzögerungszeit (t₂) freischalten.

7. Schaltungsanordnung nach Anspruch 6, dadurch gekennzeichnet, daß die Verzögerungsschaltung auf eine Verzögerungszeit (t₂) von etwa 0,5 sec ausgelegt ist.

8. Schaltungsanordnung nach Anspruch 6, dadurch gekennzeichnet, daß die Verzögerungsschaltung die Freischaltung innerhalb einer Zeitspanne (t₃) nach Auflegen des Hörers aufrechterhält, ehe der Umschalter (20) den Fernsprechapparat (11) erneut an die Ersatzstromquelle (16) anschaltet.

9. Schaltungsanordnung nach Anspruch 8, daß die Zeitspanne (t₃) etwa 6 bis 10 sec beträgt.
